# EUROPÄISCHE PATENTANMELDUNG

(11) **EP 1 518 724 A2**
(43) Veröffentlichungstag der Anmeldung: **30.03.2005**
(21) Anmeldenummer: 04021334.0
(22) Anmeldetag: 08.09.2004
(51) Int. Cl.: B60H 1/00, B60H 1/32

(54) **Klimaanlage und Verfahren zum Regeln einer Kraftfahrzeug-Klimaanlage und eines Kraftfahrzeug-Motors**

(30) Priorität: 24.09.2003 DE 10344554
(71) Anmelder: Behr GmbH & Co. KG, 70469 Stuttgart (DE)
(72) Erfinder: Heinle, Dieter, Dipl.-Ing., 73655 Plüderhausen (DE)

(57) **Zusammenfassung**

Die Erfindung betrifft eine Klimaanlage, insbesondere Kraftfahrzeug-Klimaanlage, mit einer Steuerung, wobei der Klimaanlage eine Rechnereinheit zugeordnet ist, die anhand von Messwerten und vorgegebenen Werten die Zeitdauer (T1 bzw. T3) für eine komfortable Klimatisierung bei einem Idle-stop-Betrieb und/oder einer verringerten Motor-Drehzahl berechnet, sowie ein Verfahren zum Regeln einer Kraftfahrzeug-Klimaanlage und eines Kraftfahrzeug-Motors.

## Beschreibung

Die Erfindung betrifft eine Klimaanlage, insbesondere für ein Kraftfahrzeug, gemäß dem Oberbegriff des Anspruchs 1, sowie ein Verfahren zum Regeln einer entsprechenden Kraftfahrzeug-Klimaanlage und eines Kraftfahrzeug-Motors.

Es ist ein Ziel der Kraftfahrzeughersteller, den Kraftstoffverbrauch des Fahrzeugs zu reduzieren. Eine Maßnahme zur Reduzierung des Kraftstoffverbrauchs ist das Abschalten des Motors bei vorübergehendem Stillstand, beispielsweise beim Halten an einer Ampel. Dieses vorübergehende Abschalten des Motors wird auch Idle-stop-Betrieb genannt. Diese Maßnahme wird bei heutigen verbrauchsarmen Fahrzeugen, wie beispielsweise bei dem sogenannten Dreiliter-Fahrzeug, bereits eingesetzt. Bei Fahrzeugen, die über den Idle-stop-Betriebsmodus verfügen, ist im innerstädtischen Verkehr ca. 25-30 % der Fahrzeit der Motor ausgeschaltet.

Dies ist ein Grund, warum derartige Fahrzeuge nicht mit einer Klimaanlage ausgerüstet sind, denn bei Motorstillstand kann auch ein für eine Klimaanlage notwendiger Kompressor nicht angetrieben werden, so dass im Idle-stop-Betrieb eine Klimaanlage die notwendige Kälteleistung nicht bereitstellen kann.

Zur Lösung dieses Problems ist in der EP 0 995 621 A2 vorgeschlagen, den Verdampfer der Klimaanlage durch das beim Abkühlen von feuchter Luft anfallende Kondensat zu vereisen, so dass im Idle-stop-Betrieb, wenn der Motor abgeschaltet ist, die Luft durch das dann abtauende Eis abkühlbar ist. Dieses Verfahren hat jedoch zahlreiche Nachteile. Die Wassermenge, die in der Luft vorhanden ist und die für die Vereisung des Verdampfers notwendig ist, hängt von den klimatischen Umgebungsbedingungen ab. So kann es vorkommen, dass bei geringer Luftfeuchtigkeit nicht genügend Kondenswasser für die Vereisung zur Verfügung steht. Des weiteren ist zur Vereisung des Verdampfers in der Regel ein relativ großer Zeitraum notwendig, so dass diese bekannte Klimaanlage erst nach einer relativ langen Fahrzeit im Idle-stop-Betrieb arbeiten kann. Ein weiteres Problem ist, das in der Regel der Verdampfer ungleichmäßig vereist, so dass der Verdampfer vereiste und nicht vereiste Bereiche aufweist. Des weiteren kann die Vereisung so stark sein, dass die Luft durch den Verdampfer nicht oder nur mit hohem Druckverlust strömen kann.

Ferner ist aus der DE 101 56 944 A1 eine Klimaanlage für ein Kraftfahrzeug mit in einem Kältemittelkreis angeordnetem Kompressor und Verdampfer zum Abkühlen von zu konditionierender Luft für den Innenraum offenbart, welche einen zweiten Verdampfer zum Abkühlen der Luft aufweist, der zusätzlich ein Kältespeichermedium enthält, wobei die zu konditionierende Luft wahlweise durch jeden Verdampfer einzeln oder durch beide Verdampfer gemeinsam leitbar ist. Gemäß einer alternativen Ausführungsform ist anstelle des zweiten Verdampfers der Verdampfer derart ausgebildet, dass er zwei Teilbereiche aufweist, und in einem der beiden Teilbereiche ein Kältespeichermedium enthält, wobei die zu konditionierende Luft wahlweise durch jeden Verdampfer einzeln oder durch beide Verdampfer gemeinsam leitbar ist.

Jedoch lassen auch entsprechende Klimaanlagen noch Wünsche offen, insbesondere in Hinblick auf die Dauer der Klimatisierung.

Es ist daher Aufgabe der vorliegenden Erfindung, eine Klimaanlage für ein Kraftfahrzeug zu verbessern.

Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist eine Klimaanlage, insbesondere Kraftfahrzeug-Klimaanlage, vorgesehen, mit einem Kompressor, der von einem Kraftfahrzeug-Motor betätigt wird, wobei die Klimaanlage eine Steuerung aufweist, und der Klimaanlage eine Rechnereinheit zugeordnet ist, die Teil der Steuerung ist und die anhand von Messwerten und vorgegebenen Werten die Zeitdauer für eine komfortable Klimatisierung bei einem Idle-stop-Betrieb und/oder einer verringerten Motor-Drehzahl berechnet. Dies ermöglicht eine optimierte Klimatisierung, so dass der Komfort des Kraftfahrzeugs gesteigert werden kann. Hierbei ist ein oder sind mehrere Speicher oder andere Maßnahmen wie Nachverdampfung von Kältemittel vorgesehen, welche im Falle eines Idle-stop-Betrieb oder einer verringerten Motor-Drehzahl die Klimatisierung des Kraftfahrzeug-Innenraums aufrecht erhalten, so dass es zu keinem Komfortverlust für den oder die Insassen kommt. Bei den Speichern kann es sich um Kälte- und/oder Wärmespeicher handeln.

In der Rechnereinheit ist vorzugsweise eine vorgegebene erste Vergleichs-Zeitdauer gespeichert, welche den Grenzwert für eine Abschaltung des Motors oder eine Verringerung der Motor-Drehzahl bildet, mit welcher die für einen Idle-stop-Betrieb oder einen Betrieb mit verringerten Motor-Drehzahl berechnete Zeitdauer verglichen wird.

Bevorzugt sind Sensoren für die Innenraum-Temperatur, die Sonneneinstrahlung, die Außenfeuchte, die Außen-Temperatur, die Anzahl der Insassen, die Kühlwassertemperatur, den bisherigen Fahrtverlauf, insbesondere unter Berücksichtigung der bisherigen Fahrtdauer, und/oder die Ausblastemperatur vorgesehen, wodurch die den Komfort im Fahrzeuginnenraum beeinflussenden Parameter und der Beladungszustand des oder der Speicher oder des Nachverdampfungssystems optimal überwacht werden können.

Die Rechnereinheit weist vorzugsweise ein neuronales Netz auf, wobei die einzelnen in der Rechnereinheit gespeicherten Parameter laufend korrigiert werden, so dass die Daten beständig optimiert werden, wodurch sich eine optimale Klimatisierung bei minimalem Kraftstoffverbrauch ergibt.

Eine Beladung eines Speichers erfolgt vorzugsweise in Abhängigkeit der Umgebungsbedingungen und der Klimatisierungs-Anforderung. Dadurch erübrigt sich ein unnötiges Beladen des Speichers, so dass der Kraftstoffverbrauch weiter gesenkt werden kann.

Vorzugsweise wird der Motor angeschaltet oder die Motor-Drehzahl erhöht, wenn der Speicher oder das Nachverdampfungssystem so weit entladen ist, dass keine optimale Klimatisierung mehr möglich ist. Dadurch lässt sich eine optimale Klimatisierung gewährleisten, so dass die Insassen einen optimalen Komfort haben.

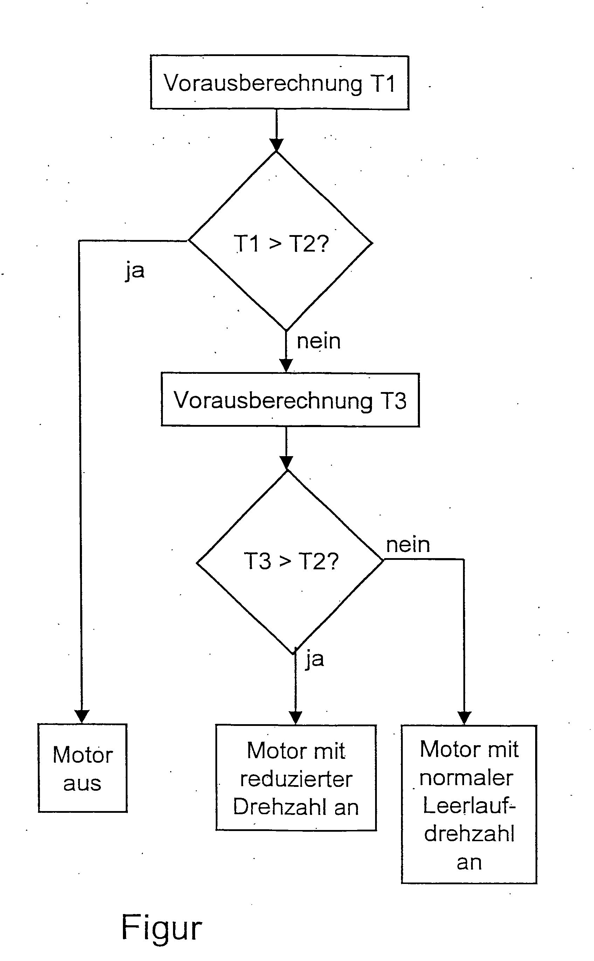

Im Folgenden wird die Erfindung anhand eines Ausführungsbeispiels unter Bezugnahme auf die Zeichnung im Einzelnen erläutert. In der Zeichnung zeigt die einzige Figur ein Blockschaltbild, das die erfindungsgemäße Regelung verdeutlicht.

Läuft der Motor eines Kraftfahrzeugs, so erfolgt mittels einer der Klimaanlage und gegebenenfalls auch anderen Komponenten zugeordneten Rechnereinheit, anhand von Messwerten und vorgegebenen Werten eine Vorausberechnung wie lange bei einem Motorstopp (Idle-stop-Betrieb) eine komfortable Klimatisierung auf Grund der aktuellen Beladesituation eines Speichermediums, das Teil der Klimaanlage ist, möglich ist. Die Rechnereinheit ist vorliegend Teil der Steuerung der Klimaanlage und des Belüftungssystems des Kraftfahrzeugs. Deshalb wird auf sie als Teil der Klimaanlage Bezug genommen, auch wenn sie gegebenenfalls räumlich nicht in, an oder in nächster Nähe der Klimaanlage angeordnet ist, Dabei kann als Speicher ein Kältespeicher (insbesondere im Bereich des Verdampfers angeordnet) und/oder ein Wärmespeicher (insbesondere im Bereich des Heizkörpers angeordnet) vorgesehen sein, wobei auch mehrere Speicher möglich sind.

Die Berechung des aktuellen Beladezustands des Speichers (oder der Speicher) erfolgt anhand des bisherigen Fahrtverlaufs, insbesondere unter Berücksichtigung die bisherige Fahrtdauer gegebenenfalls unter Berücksichtigung von Zwischenstopps, der Ausblastemperatur oder ähnlicher Parameter. Als relevante Parameter in Hinblick auf die Berechnung der Dauer einer komfortablen Klimatisierung des Fahrzeuginnenraums werden insbesondere ermittelt: Innenraum-Temperatur, Außentemperatur, Sonneneinstrahlung, Außenfeuchte, Anzahl der Insassen, Kühlwassertemperatur. Aus all diesen Daten wird, unter Berücksichtigung von vorgegebenen Daten, ein erster Zeitwert T1 ermittelt.

Bei einem Fahrzeugstopp, d.h. einer Geschwindigkeit von 0 km/h, wird der aktuelle berechnete Zeitwert T1 für eine Entscheidung verwendet, ob der Motor ausgeschaltet werden kann, oder ob der Motor eingeschaltet bleiben soll. Ist der Zeitwert T1 gleich oder kleiner als ein vorgegebener Zeitwert T2, beispielsweise 10 s, so bleibt der Motor in Betrieb, damit der Komfort für die Insassen aufrechterhalten wird. Ist der Zeitwert größer als der Zeitwert T2, so wird der Motor ausgeschaltet, sofern keine anderen Gründe für ein Weiterlaufen des Motors sprechen, wie z.B. eine Anforderung durch die Bordnetzüberwachung.

Wird der Motor ausgeschaltet (Idle-stop-Betrieb), so erfolgt eine laufende Überwachung der Klimaparameter, um Änderungen des Komforts im Fahrzeuginnenraum festzustellen. Es erfolgt ein automatischer Start des Motors, ausgelöst durch ein entsprechendes Signal, bevor der bzw. die Insassen einen Diskomfort wahrnehmen, d.h. die Temperatur merklich ansteigt oder abfällt, je nach Art des Speichers.

Gemäß einer Variante, die in der Figur dargestellt ist, ist auch eine Reduzierung der Motor-Drehzahl möglich, wenn festgestellt wird, dass der Motor nicht ganz abgeschaltet werden sollte, es jedoch ausreicht, wenn der vom Motor angetriebene Kompressor mit verringerter Drehzahl, z.B. von 600 1/min auf 200 1/min, weiterläuft. Durch die Reduzierung der Drehzahl kann der Zeitwert T1 auf einen dritten Zeitwert T3 erhöht werden, über den hinweg bei dieser reduzierten Drehzahl eine Klimatisierung möglich ist. Alle anderen Funktionen des Kraftfahrzeugs werden jedoch gemäß dem vorliegenden Ausführungsbeispiel bei reduzierter Motor-Drehzahl so behandelt, als ob der Motor ausgeschaltet wäre. Ist T3 größer als T2, so läuft der Motor mit reduzierter Motor-Drehzahl weiter, ist T3 kleiner oder gleichgroß wie T2, so läuft der Motor mit der normalen Motor-Drehzahl weiter.

Bei der Berechnung der erforderlichen Beladung, sofern diese geregelt werden kann, ist zu berücksichtigen, dass bei moderaten Temperaturen und ohne Sonneneinstrahlung keine Speicherfunktionen für Kälte oder Wärme mangels eines Erfordernisses einer Klimatisierung erforderlich sind. Somit ist es nicht erforderlich, beispielsweise den Verdampfer auf einer sehr niedrige Temperatur (Phasenumwandlung des Speichermediums) zu betreiben, wobei eine Regelung der Verdampfer-Temperatur in Abhängigkeit des aktuellen Temperatur- und/oder Eritfeuchtungsbedarfs, d.h. der Klimatisierungs-Anforderung, erfolgt.

Gemäß einer Weiterentwicklung weist die Rechnereinheit ein neuronales Netz auf, so dass die Zahl der zur Verfügung stehenden Vergleichsdaten laufend vergrößert wird und bei Bedarf Anpassungen der gespeicherten, vorgegebenen Daten erfolgen, so dass die Berechnungen beständig verbessert werden können und dadurch die Klimatisierung optimiert und der Kraftstoffverbrauch gesenkt werden kann.

Eine entsprechende Rechnereinheit mit dazugehörigen Sensoren zur Ermittlung relevanter Parameter kann prinzipiell in alle Kraftfahrzeug-Klimaanlagen mit einem Speichermedium integriert werden, so dass an die Klimaanlage keine besonderen Anforderungen gestellt werden. Ferner ist prinzipiell auch eine nachträgliche Umrüstung vorhandener Klimaanlagen möglich.

## Patentansprüche

1. Klimaanlage, insbesondere Kraftfahrzeug-Klimaanlage mit einem Kompressor, der von einem Kraftfahrzeug-Motor betätigt wird, wobei die Klimaanlage eine Steuerung aufweist, **dadurch gekennzeichnet, dass** der Klimaanlage eine Rechnereinheit zugeordnet ist, die Teil der Steuerung ist und die anhand von Messwerten und vorgegebenen Werten die Zeitdauer (T1 bzw. T3) für eine komfortable Klimatisierung bei einem Idle-stop-Betrieb und/oder einer verringerten Motor-Drehzahl berechnet.

2. Klimaanlage nach Anspruch 1, **dadurch gekennzeichnet, dass** in der Rechnereinheit eine vorgegebene Vergleichs-Zeitdauer (T2) gespeichert ist, welche den Grenzwert für eine Abschaltung des Motors oder eine Verringerung der Motor-Drehzahl bildet.

3. Klimaanlage nach einem der vorhergehenden Ansprüche, **dadurch gekennzeichnet, dass** Sensoren für die Innenraum-Temperatur und/oder die Sonneneinstrahlung und/oder die Außenfeuchte und/oder die Außen-Temperatur und/oder die Anzahl der Insassen und/oder die Kühlwassertemperatur und/oder den bisherigen Fahrtverlauf, insbesondere unter Berücksichtigung der bisherigen Fahrtdauer, und/oder die Ausblastemperatur vorgesehen sind.

4. Klimaanlage nach einem der vorhergehenden Ansprüche, **dadurch gekennzeichnet, dass** die Rechnereinheit ein neuronales Netz umfasst.

5. Verfahren zum Regeln einer Kraftfahrzeug-Klimaanlage und eines Kraftfahrzeug-Motors, wobei die Klimaanlage einen Kompressor aufweist, welcher durch einen Kraftfahrzeug-Motor betätigt wird und die Klimaanlage für einen Idle-stop-Betrieb ausgelegt ist, **dadurch gekennzeichnet, dass** eine Rechnereinheit Messwerte auswertet und ein Zeitwert (T1) ermittelt, welcher einer Zeit entspricht, während der im Falle eines Idle-stop-Betriebs eine Aufrechterhaltung der Klimatisierung möglich ist, und/oder einen Zeitwert (T3) ermittelt, welcher einer Zeit entspricht, während der im Falle einer verringerten Motor-Drehzahl eine Aufrechterhaltung der Klimatisierung möglich ist.

6. Verfahren nach Anspruch 5, **dadurch gekennzeichnet, dass** der Zeitwert (T1) mit einem zweiten Zeitwert (T2) verglichen wird, welcher einer Mindestbeladung entspricht, wobei wenn der Zeitwert (T1) unter einem vorgegebenen Zeitwert (T2), ist, der Motor in Betrieb bleibt.

7. Verfahren nach einem der Ansprüche 5 oder 6, **dadurch gekennzeichnet, dass** ein Zeitwert (T3) berechnet wird, welcher einer Zeit entspricht, während der im Falle eines Betriebs mit verringerter Motor-Drehzahl eine Aufrechterhaltung der Klimatisierung möglich ist.

8. Verfahren nach einem der Ansprüche 5 bis 7, **dadurch gekennzeichnet, dass** eine Beladung eines Speichers in Abhängigkeit der Umgebungsbedingungen und der Klimatisierungs-Anforderung erfolgt.

9. Verfahren nach einem der Ansprüche 5 bis 8, **dadurch gekennzeichnet, dass** vorgegebene Parameter laufend optimiert werden.

10. Verfahren nach einem der Ansprüche 5 bis 9, **dadurch gekennzeichnet, dass** der Motor automatisch angeschaltet oder die Motor-Drehzahl automatisch von einer verringerten Motor-Drehzahl auf eine höhere Motor-Drehzahl erhöht wird, wenn der Speicher so weit entladen ist, dass keine optimale Klimatisierung mehr möglich ist.

11. Verfahren nach einem der Ansprüche 5 bis 10, **dadurch gekennzeichnet, dass** bei einer verringerten Motor-Drehzahl ausschließlich der Kompressor des Kältemittelkreislaufs der Klimaanlage mit Energie versorgt wird.

12. Verfahren zum Regeln einer Kraftfahrzeug-Klimaanlage und eines Kraftfahrzeug-Motors, wobei die Klimaanlage einen Kompressor aufweist, welcher durch einen Kraftfahrzeug-Motor betätigt wird und die Klimaanlage für einen Idle-stop-Betrieb ausgelegt ist, **dadurch gekennzeichnet, dass** eine Rechnereinheit im Idle-stop-Betrieb Messwerte auswertet und einen Komfortwert und/oder einen Speicherbeladungszustand ermittelt, wobei abhängig vom ermittelten Komfortwert und/oder Speicherbeladungszustand der Motor automatisch angeschaltet oder die Motor-Drehzahl automatisch von einer verringerten Motor-Drehzahl auf eine höhere Motor-Drehzahl erhöht wird, wenn der ermittelte Komfortwert außerhalb eines vorgebbaren Komfortbandes und/oder der Speicherbeladungszustand unterhalb eines vorgebbaren Schwellwertes liegt.

13. Verfahren nach Anspruch 12, **dadurch gekennzeichnet, dass** der ermittelte Komfortwert den Speicherbeladungszustand repräsentiert.

14. Verfahren nach Anspruch 12 oder 13, **dadurch gekennzeichnet, dass** das vorgebbare Komfortband aus der Innenraum-Temperatur und/oder der Sonneneinstrahlung und/oder der Außenfeuchte und/oder der Außen-Temperatur und/oder der Anzahl der Insassen und/oder der Kühlwassertemperatur und/oder dem bisherigen Fahrtverlauf, insbesondere unter Berücksichtigung der bisherigen Fahrtdauer, und/oder der Ausblastemperatur berechnet wird.
